(19) Europäisches Patentamt / European Patent Office / Office européen des brevets

(11) **EP 4 006 442 A1**

(12) **EUROPEAN PATENT APPLICATION**
published in accordance with Art. 153(4) EPC

(43) Date of publication:
**01.06.2022 Bulletin 2022/22**

(21) Application number: **19939120.2**

(22) Date of filing: **30.07.2019**

(51) International Patent Classification (IPC):
**F25B 1/00** $^{(2006.01)}$ **F24F 5/00** $^{(2006.01)}$

(52) Cooperative Patent Classification (CPC):
**F24F 5/00; F25B 1/00**

(86) International application number:
**PCT/JP2019/029838**

(87) International publication number:
**WO 2021/019687 (04.02.2021 Gazette 2021/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **YOKOYAMA, Tetsuhide**
**Tokyo 100-8310 (JP)**

• **YANACHI, Satoru**
**Tokyo 100-8310 (JP)**
• **ITO, Masahiro**
**Tokyo 100-8310 (JP)**
• **NAGANO, Tomohiro**
**Tokyo 100-8310 (JP)**
• **NISHIYAMA, Takumi**
**Tokyo 100-8310 (JP)**
• **SATO, Tsuyoshi**
**Tokyo 100-8310 (JP)**

(74) Representative: **Pfenning, Meinig & Partner mbB**
**Patent- und Rechtsanwälte**
**An der Frauenkirche 20**
**01067 Dresden (DE)**

(54) **AIR-CONDITIONING DEVICE**

(57) An air conditioning apparatus (1) includes a first refrigerant circuit (2) enclosing a first refrigerant, and a second refrigerant circuit (3) enclosing a second refrigerant. The first refrigerant circuit (2) includes a compressor (10) configured to compress the first refrigerant in a gaseous state, an outdoor heat exchanger (13) configured to exchange heat between the first refrigerant and outside air, an expansion device (24) configured to decompress and expand the first refrigerant, and a first flow path (H1) through which the first refrigerant passes in an intermediate heat exchanger (22) configured to exchange heat between the first refrigerant and the second refrigerant. The second refrigerant circuit (3) includes a pump (23) configured to increase a pressure of the second refrigerant in a liquid state and transfer the second refrigerant, a second flow path (H2) through which the second refrigerant passes in the intermediate heat exchanger (22), and an indoor heat exchanger (31, 41, 51) configured to exchange heat between the second refrigerant and air blown into a room. At least one of the first refrigerant and the second refrigerant has a global warming potential lower than that of R32, and the second refrigerant has a lower flammable limit concentration higher than that of the first refrigerant.

FIG.1

**Description**

TECHNICAL FIELD

The present disclosure relates to an air conditioning apparatus.

BACKGROUND ART

There is a need for an air conditioning apparatus that uses various types of alternative refrigerants to HCFC (Hydro Chloro Fluoro Carbon) refrigerants believed to destroy the ozone layer, that operates with a coefficient of performance comparable to those of the HCFC refrigerants in an actual machine, and that is able to use the alternative refrigerants safely as operating refrigerants.

Japanese Patent Laying-Open No. 7-269964 (PTL 1) discloses an example of such an air conditioning apparatus. This air conditioning apparatus includes a flow path A enclosing a refrigerant "a" and a flow path B enclosing a refrigerant "b", and includes an intermediate heat exchanger in which these refrigerants "a" and "b" exchange heat with each other.

CITATION LIST

PATENT LITERATURE

PTL 1: Japanese Patent Laying-Open No. 7-269964

SUMMARY OF INVENTION

TECHNICAL PROBLEM

There has been a pressing need to prevent global warming in recent years, with the adoption of the Kigali Amendment to the Montreal Protocol, and the EU F-gas Regulation. In refrigeration and air conditioning fields, it has been required to make the shift to refrigerants with lower global warming potentials ("GWPs" hereinafter). HFC (Hydro Fluoro Carbon) refrigerants such as R410A, which have been mainly used in a vapor compression refrigeration cycle that is a heat source generating device of an air conditioning apparatus, have very high GWPs of about 2000. For this reason, HC

(Hydrocarbon) refrigerants such as propane, HFO (Hydro Fluoro Olefin) refrigerants, and mixed refrigerants mainly composed of those refrigerants have been proposed as candidate alternative refrigerants to the HFC refrigerants.

Propane, being a highly flammable refrigerant, is subject to restrictions of international standards (such as the IEC) and national standards (such as the ISO, the High Pressure Gas Safety Act) when used indoors in terms of installation of safety measures and the amount of enclosed refrigerant. Therefore, an indirect air conditioning system has been developed, in which a primary circuit for generating a heat source is disposed outdoors, a secondary circuit is formed indoors with a heat transfer medium different from that of the primary circuit, and the heat transfer medium that has been subjected to heat exchange in an intermediate heat exchanger is transferred to an indoor heat exchanger.

Generally, the indirect air conditioning system uses water as the heat transfer medium on the secondary circuit side, and uses a pump as a drive device. When sensible heat of water is used, a liquid flow rate increases as compared to when latent heat of refrigerant is used, and a pump for transferring water and a liquid pipe increase in size, together with an increase in power. Therefore, it has been difficult to replace a refrigerant pipe of a direct air conditioning apparatus using existing refrigerants with a water pipe. In addition, water has been an unsuitable heat transfer medium in a facility where it is prohibited to bring in a water pipe in the first place, for example, a data center where many large-scale computers are installed.

An air conditioning apparatus using R32 as a refrigerant for a primary circuit has a high theoretical coefficient of performance (hereinafter referred to as theoretical COP) determined by a thermophysical property value, but has a GWP value of 675, which is significantly higher than what is defined by international regulations. In addition, R32, having a low flammable property, requires safety measures when used indoors. Accordingly, refrigerants with HFO-based refrigerants mixed therein have been developed, which have a theoretical COP equivalent to that of R32, and also have a low GWP property in order to improve the GWP and the flammable property.

For an indirect air conditioning system using such refrigerants, the configuration described in Japanese Patent Laying-Open No. 7-269964 can be employed. However, with regard to an indirect air conditioning apparatus using a highly flammable propane refrigerant, or a low flammable HFO-based refrigerant, or a mixed refrigerant mainly composed of these refrigerants on the primary circuit side, and using another refrigerant for a heat transfer medium of a secondary circuit, no detailed studies have been conducted on a method for selecting a refrigerant on the secondary circuit side for reducing a total GWP value, and on cooling-heating operation switching means for providing efficient operation.

The present disclosure has been made to solve the problem described above, and has an object to provide an air conditioning apparatus capable of reducing a total GWP value without reducing efficiency by a combination of appropriate refrigerants.

SOLUTION TO PROBLEM

The present disclosure relates to an air conditioning apparatus. The air conditioning apparatus includes a first refrigerant circuit enclosing a first refrigerant, and a second refrigerant circuit enclosing a second refrigerant. The first refrigerant circuit includes a compressor configured to compress the first refrigerant in a gaseous state, an outdoor heat exchanger configured to exchange heat between the first refrigerant and outside air, an expansion device configured to decompress and expand the first refrigerant, and a first flow path through which the first refrigerant passes in an intermediate heat exchanger configured to exchange heat between the first refrigerant and the second refrigerant. The second refrigerant circuit includes a pump configured to increase a pressure of the second refrigerant in a liquid state and transfer the second refrigerant, a second flow path through which the second refrigerant passes in the intermediate heat exchanger, and an indoor heat exchanger configured to exchange heat between the second refrigerant and air blown into a room. At least one of the first refrigerant and the second refrigerant has a global warming potential lower than that of R32, and the second refrigerant has a lower flammable limit concentration higher than that of the first refrigerant.

ADVANTAGEOUS EFFECTS OF INVENTION

According to the air conditioning apparatus of the present disclosure, a total GWP value of enclosed refrigerant can be reduced, thereby contributing to preventing global warming.

BRIEF DESCRIPTION OF DRAWINGS

Fig. 1 is a refrigerant circuit diagram during cooling operation of an air conditioning apparatus according to Embodiment 1.
Fig. 2 is a p-h diagram of a vapor compression refrigeration cycle in Fig. 1.
Fig. 3 is a refrigerant circuit diagram during heating operation of the air conditioning apparatus according to Embodiment 1.
Fig. 4 is a p-h diagram of a vapor compression refrigeration cycle in Fig. 3.
Fig. 5 is a diagram showing manners of combination of a forward direction and a backward direction of a direction of a first refrigerant by a four-way valve 12 in a first refrigerant circuit 2, and a forward direction and a backward direction of a rotational direction of a pump 23 in a second refrigerant circuit 3.
Fig. 6 is a flowchart illustrating control of switching a refrigerant circulation direction performed by a controller 100.
Fig. 7 is a diagram showing relations between used refrigerants and total GWP values in Embodiment 1 and Comparative Examples 1 to 3.
Fig. 8 is a diagram showing comparison results of total GWP values (with respect to an R32 direct expansion cycle) according to Embodiment 1 and its Modifications 1 to 3.
Fig. 9 is a diagram showing comparison results of total GWP values according to Embodiment 2, with respect to the R32 direct expansion cycle.

DESCRIPTION OF EMBODIMENTS

In the following, embodiments of the present disclosure will be described in detail with reference to the drawings. While several embodiments are described below, it has been intended from the time of filing of the present application to appropriately combine configurations described in the respective embodiments. Note that the same or corresponding portions are designated by the same symbols in the drawings and will not be described repeatedly.

Embodiment 1

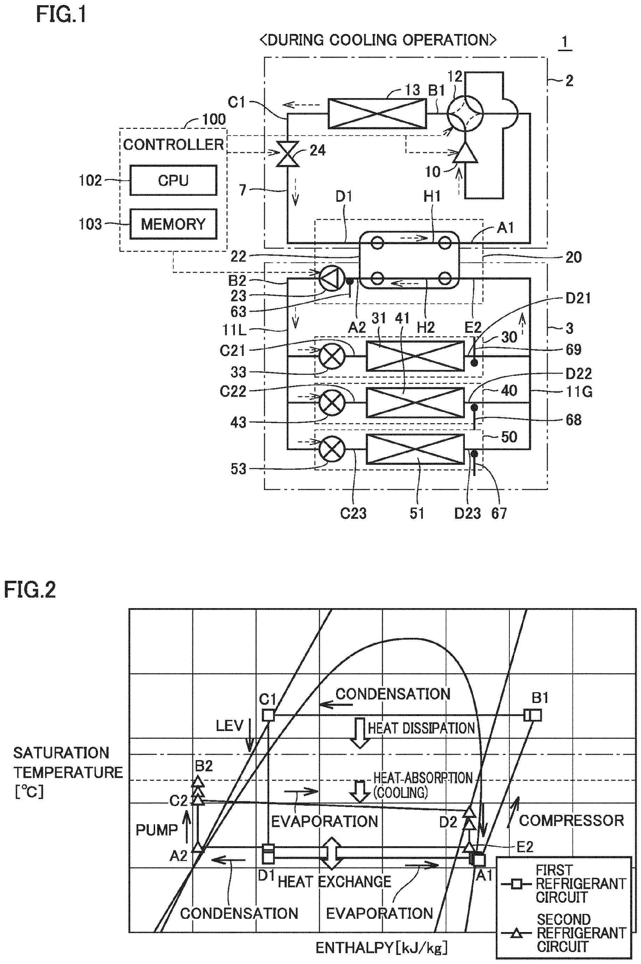

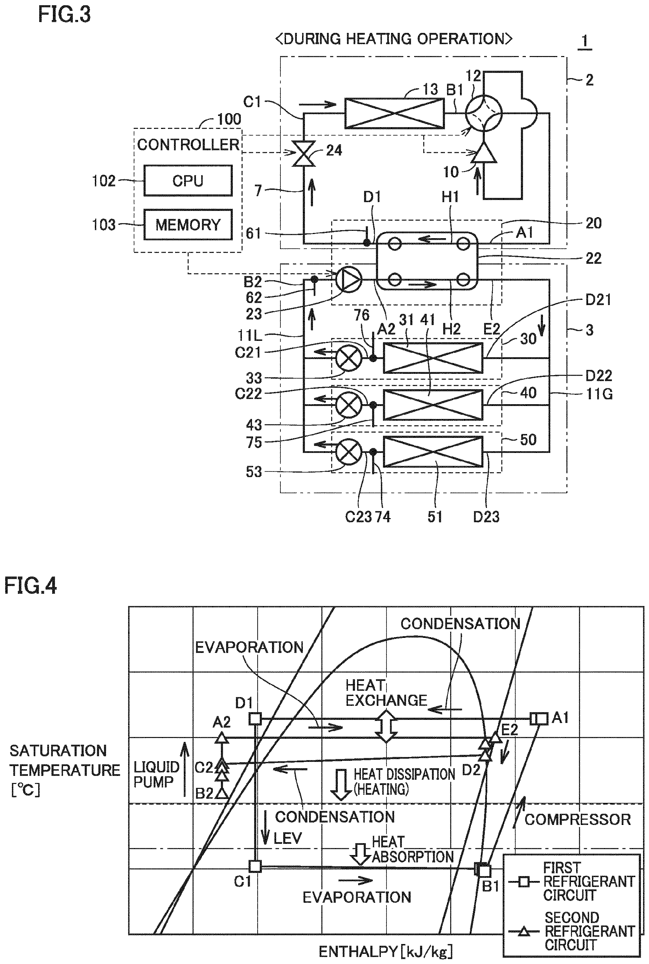

Fig. 1 is a refrigerant circuit diagram during cooling operation of an air conditioning apparatus according to Embodiment 1. Fig. 2 is a p-h diagram of a vapor compression refrigeration cycle in Fig. 1. Fig. 3 is a refrigerant circuit diagram during heating operation of the air conditioning apparatus according to Embodiment 1. Fig. 4 is a p-h diagram of a vapor compression refrigeration cycle in Fig. 3.

As shown in Fig. 1, an air conditioning apparatus 1 includes a first refrigerant circuit 2, a second refrigerant circuit 3, and a controller 100. First refrigerant circuit 2 corresponds to an "outdoor side cycle," "heat source side cycle" or "primary circuit." Second refrigerant circuit 3 corresponds to an "indoor side cycle," "use side cycle" or "secondary circuit."

First refrigerant circuit 2 includes, as main elements, a compressor 10, a four-way valve 12, an outdoor heat exchanger 13, an expansion device 24, a first flow path H1 of an intermediate heat exchanger 22, and a pipe 7.

Second refrigerant circuit 3 includes, as main elements, a second flow path H2 of intermediate heat exchanger 22, a pump 23, indoor temperature control units 30, 40, 50, and pipes 11L, 11G. Indoor temperature control units 30, 40, 50 are connected in parallel with one another between pipe 11L and pipe 11G.

Indoor temperature control unit 30 includes an indoor heat exchanger 31, a fan (not shown) for blowing indoor air to indoor heat exchanger 31, and a flow rate control valve 33 for controlling a flow rate of a second refrigerant. Indoor heat exchanger 31 exchanges heat between the second refrigerant and the indoor air.

Indoor temperature control unit 40 includes an indoor heat exchanger 41, a fan (not shown) for blowing indoor air to indoor heat exchanger 41, and a flow rate control valve 43 for controlling a flow rate of the second refrigerant. Indoor heat exchanger 41 exchanges heat between the second refrigerant and the indoor air.

Indoor temperature control unit 50 includes an indoor heat exchanger 51, a fan (not shown) for blowing indoor air to indoor heat exchanger 51, and a flow rate control valve 53 for controlling a flow rate of the second refrigerant. Indoor heat exchanger 51 exchanges heat between the second refrigerant and the indoor air.

While an air conditioning apparatus including three indoor temperature control units is illustrated by way of example in the present embodiment, any number of indoor temperature control units may be provided.

First refrigerant circuit 2 encloses a first refrigerant and forms a closed circuit. The first refrigerant used in Embodiment 1 is, for example, an HFC refrigerant such as R32, an HC refrigerant such as propane (R290). Second refrigerant circuit 3 encloses the second refrigerant and forms a closed circuit. The second refrigerant used in Embodiment 1 is, for example, a $CF_3I$ single refrigerant, or a mixed refrigerant such as R466A including $CF_3I$.

A feature of the present embodiment is that a combination of the first refrigerant and the second refrigerant is used, with at least one of the first refrigerant and the second refrigerant having a global warming potential lower than that of R32, and the second refrigerant having a lower flammable limit concentration higher than that of the first refrigerant.

First refrigerant circuit 2 is initially described. Compressor 10 sucks and compresses the low-temperature and low-pressure gaseous first refrigerant, and discharges the high-temperature and high-pressure gaseous first refrigerant. Four-way valve 12 is provided downstream of a discharge port of compressor 10, and is configured to switch a flow path of the refrigerant discharged from compressor 10 between during the cooling operation and during the heating operation. During the cooling operation in which the refrigerant is circulated in a direction indicated by dashed line arrows in Fig. 1, four-way valve 12 forms a flow path from compressor 10 toward outdoor heat exchanger 13. During the heating operation in which the refrigerant is circulated in a direction indicated by solid line arrows in Fig. 3, on the other hand, four-way valve 12 forms a flow path from compressor 10 toward intermediate heat exchanger 22.

During the cooling operation, outdoor heat exchanger 13 functions as a capacitor for condensing and liquefying the high-temperature and high-pressure gaseous first refrigerant and dissipating heat to outside air. Conversely, during the heating operation, outdoor heat exchanger 13 functions as an evaporator for evaporating and gasifying the low-temperature and low-pressure liquid first refrigerant and taking heat from outside air. Expansion device 24 decompresses and expands the refrigerant passing therethrough into a low-temperature and low-pressure refrigerant. An electronic expansion valve can be used, for example, as expansion device 24.

Intermediate heat exchanger 22 is configured such that heat exchange takes place between the first refrigerant circulating through first refrigerant circuit 2 and the second refrigerant circulating through second refrigerant circuit 3. In intermediate heat exchanger 22, there are formed a first refrigerant gap flow path and a second refrigerant gap flow path. The first refrigerant gap flow path is provided with a low-temperature-side inlet/outlet and a high-temperature-side inlet/outlet, and the second refrigerant gap flow path is provided with a low-temperature-side inlet/outlet and a high-temperature-side inlet/outlet. By appropriately disposing the low-temperature-side inlet/outlet and the high-temperature-side inlet/outlet of the second refrigerant gap flow path with respect to the high-temperature-side inlet/outlet and the low-temperature-side inlet/outlet of the first refrigerant gap flow path, the first refrigerant and the second refrigerant form a counter flow.

A plate heat exchanger, which is generally advantageous in cost and efficiency, is preferably used as intermediate heat exchanger 22. In the plate heat exchanger, for example, a plurality of rectangular corrugated plates are stacked, with a plurality of rectangular gaps formed between them. The plurality of rectangular gaps alternately serve as the first refrigerant gap flow path and the second refrigerant gap flow path in the stacked direction.

In first refrigerant circuit 2, there is provided four-way valve 12 on a pipe that discharges the first refrigerant in a gaseous state from compressor 10. Four-way valve 12 switches a circulation direction of the first refrigerant so as to direct the first refrigerant from the discharge port of compressor 10 toward outdoor heat exchanger 13 during the cooling operation, and to direct the first refrigerant toward intermediate heat exchanger 22 during the heating operation.

In second refrigerant circuit 3, on the other hand, pump 23 is configured to be able to switch its rotational direction between a forward direction and a backward direction. Pump 23 switches a circulation direction of the second refrigerant so as to direct the second refrigerant in a liquid state from pump 23 to indoor heat exchangers 31, 41, 51 during the cooling operation, and to direct the second refrigerant in a liquid state from pump 23 to second flow path H2 of intermediate heat exchanger 22 during the heating operation.

In this manner, during the cooling operation, the second refrigerant circulating through second refrigerant circuit 3 is cooled by the first refrigerant circulating through first refrigerant circuit 2. During the heating operation, on the other hand, the second refrigerant circulating through second refrigerant circuit 3 is heated by the first refrigerant circulating through first refrigerant circuit 2.

Pipe 7 connects compressor 10, four-way valve 12, outdoor heat exchanger 13, expansion device 24, and first flow path H1 of intermediate heat exchanger 22, and allows the first refrigerant to circulate through these components. Intermediate heat exchanger 22 and pump 23 form an intermediate heat exchange unit 20, and is usually disposed outdoors.

Pump 23 is suitable means for increasing a pressure of refrigerant in a liquid state and transferring the refrigerant, and is of a pump type capable of rotating in forward and backward directions. Such pump types include, for example, a Wesco type (also referred to as a vortex type, a regenerative type), a screw type, and the like. In air conditioning apparatus 1 of Embodiment 1, pump 23 on the second refrigerant circuit 3 side increases a pressure of the second refrigerant in equal volume while the second refrigerant remains in a liquid state, and hence only a small theoretical amount of enthalpy change is needed. Therefore, power required in pump 23 can be kept low.

Indoor heat exchangers 31, 41, 51 each exchange heat between the second refrigerant passing therethrough and indoor air. Indoor heat exchangers 31, 41, 51 each function as a so-called evaporator during the cooling operation, and each function as a gas cooler during the heating operation.

Pipes 11L, 11G connect intermediate heat exchanger 22, pump 23, and indoor heat exchangers 31, 41, 51. By connecting these components with pipes 11L, 11G, second refrigerant circuit 3 through which the second refrigerant can circulate is formed. On pipe 11L connected to respective inlet sides of indoor heat exchangers 31, 41, 51, flow rate control valves 33, 43, 53 are provided. By adjusting the opening degrees of flow rate control valves 33, 43, 53, the flow rates of the second refrigerant passing through indoor heat exchangers 31, 41, 51 installed in respective rooms from pump 23 can be adjusted.

In cooling conditions of Fig. 1, pipe 11L from a point A2 near an outlet of the intermediate heat exchanger to the inlets of indoor heat exchangers 31, 41, 51 via pump 23 is a pipe for mainly passing liquid refrigerant. Pipe 11G from the outlets of indoor heat exchangers 31, 41, 51 to an inlet E2 of the intermediate heat exchanger is a pipe for mainly passing gas refrigerant.

Indoor temperature control units 30, 40, 50 formed of indoor heat exchangers 31, 41, 51 and flow rate control valves 33, 43, 53 are disposed in respective rooms, and can control the temperatures of indoor air.

The switching of the refrigerant circulation direction performed in each of first refrigerant circuit 2 and second refrigerant circuit 3 is performed by controller 100.

Controller 100 includes a processor 102 and a memory 103. Memory 103 is configured to include, for example, a ROM (Read Only Memory), a RAM (Random Access Memory), and a flash memory. The flash memory stores an operating system, an application program, and various types of data. Processor 102 controls the overall operation of air conditioning apparatus 1. Controller 100 shown in Fig. 1 is implemented through execution, by processor 102, of the operating system and the application program stored in memory 103. For execution of the application program, the various types of data stored in memory 103 are referenced.

Controller 100 may further include a reception device if the controller receives a signal from a remote controller. When a plurality of indoor temperature control units are arranged, such a reception device is provided to correspond to each of the plurality of indoor units.

If the controller is implemented as a plurality of control units, the processor is included in each of the plurality of control units. In such a case, the plurality of processors cooperate with one another to perform the overall control of air conditioning apparatus 1.

In accordance with outputs from a pressure sensor, a temperature sensor and the like, controller 100 controls compressor 10, expansion device 24, pump 23, flow rate control valves 33, 43, 53, and rotational speeds of not shown fans attached to heat exchangers 15,31,42,51.

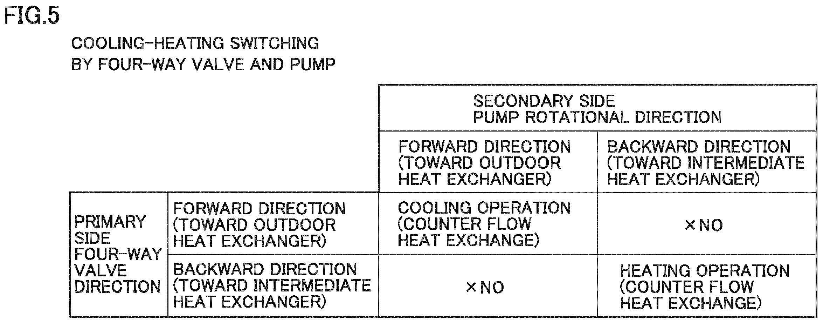

Controller 100 switches the circulation direction of the first refrigerant in first refrigerant circuit 2 by four-way valve 12 between during the refrigerant operation and during the heating operation. In conjunction therewith, controller 100 switches the rotational direction of pump 23 in second refrigerant circuit 3 such that the second refrigerant exchanges heat with the first refrigerant in a counter flow in intermediate heat exchanger 22, and is subcooled at a suction port of pump 23. Fig. 5 is a diagram showing manners of combination of a forward direction and a backward direction of the direction of the first refrigerant by four-way valve 12 in first refrigerant circuit 2, and a forward direction and a backward direction of the rotational direction of pump 23 in second refrigerant circuit 3.

In Fig. 5, with regard to four-way valve 12, a direction in which the first refrigerant discharged from compressor 10 flows toward outdoor heat exchanger 13 is indicated as the "forward direction," and a direction in which the first refrigerant discharged from compressor 10 flows toward intermediate heat exchanger 22 is indicated as the "backward direction." With regard to the rotational direction of pump 23, a direction in which the refrigerant delivered from pump 23 flows toward indoor heat exchangers 31, 41, 51 is indicated as the "forward direction," and a direction in which the refrigerant delivered from pump 23 flows toward intermediate heat exchanger 22 is indicated as the "backward direction."

A combination of the "forward direction" and the "forward direction" is selected during the cooling operation, and a combination of the "backward direction" and the "backward direction" is selected during the heating operation, such that the first refrigerant and the second refrigerant flow as a counter flow in intermediate heat exchanger 22. A combination of the "forward direction" as one of the directions and the "backward direction" as the other direction causes a parallel flow which is inefficient, and hence its use is prohibited.

The operation is controlled while required capability is ensured under temperature environment conditions during the heating operation and during the cooling operation, respectively, basically in a similar manner to that of general control. In the embodiments of the present disclosure, however, the operation is performed by noting the following points 1) to 3) in particular so as to provide highly efficient operation.

In the first refrigerant circuit through which the first refrigerant circulates, the operation is performed such that 1) a degree of subcooling (SC) of the first refrigerant at an evaporator outlet is ensured, and 2) a degree of superheat (SH) of the first refrigerant at the evaporator outlet is ensured.

In the second circuit through which the second refrigerant circulates, on the other hand, the operation is performed such that 3) the second refrigerant to be sucked into pump 23 is maintained in a liquid phase state. This is important in ensuring not only efficiency but also pump reliability.

(Cooling Operation Control)

When air conditioning apparatus 1 configured as shown in Figs. 1 and 2 is set in a cooling operation mode, controller 100 controls the rotational speed of compressor 10 based on a signal from a temperature sensor 63 disposed near the outlet of intermediate heat exchanger 22, so as to maintain constant an outlet temperature at a point A1 near the outlet of intermediate heat exchanger 22.

Compressor 10 also controls the rotational speed of pump 23 based on a signal from temperature sensor 63, so as to maintain constant a degree of subcooling of the second refrigerant near the outlet of intermediate heat exchanger 22 shown at point A2.

Compressor 10 also controls the opening degrees of flow rate control valves 33, 43, 53 based on signals from temperature sensors 67, 68, 69 disposed near the outlets of indoor heat exchangers 31, 41, 51, so as to maintain constant the degrees of superheat at locations indicated by points D21, D22, D23 near the outlets of indoor heat exchangers 31, 41, 51.

That is, when the degrees of superheat at points D21, D22, D23 sensed by temperature sensors 67, 68, 69 are higher than "target degrees of superheat" set in advance as targets, the opening degrees of flow rate control valves 33, 43, 53 are increased, and when the degrees of superheat are lower, the opening degrees of flow rate control valves 33, 43, 53 are reduced. In this manner, the opening degrees of flow rate control valves 33, 43, 53 are controlled such that the degrees of superheat near the outlets of indoor heat exchangers 31, 41, 51 are maintained constant.

According to air conditioning apparatus 1 in the present embodiment, during the cooling operation, the rotational speed of compressor 10 is controlled such that the degree of subcooling near the outlet of intermediate heat exchanger 22 is maintained constant, and the opening degrees of flow rate control valves 33, 43, 53 are controlled such that the degrees of superheat near the outlets of indoor heat exchangers 31, 41, 51 are maintained constant. As a result, the rotational speed of pump 23 is controlled depending on the total load of second refrigerant circuit 3, and air conditioning apparatus 1 can thereby be operated at an efficient and optimal operational point depending on the load of each of indoor heat exchangers 31, 41, 51.

In intermediate heat exchanger 22, the first refrigerant flows in through a point D1 near the inlet in a low-pressure liquid state, changes in phase while taking heat from the second refrigerant, and flows out to A1 near the outlet in a low-pressure gaseous state. The second refrigerant, on the other hand, flows in through point E2 near the inlet in a low-pressure gaseous state, changes in phase while losing heat to the first refrigerant, and flows out to point A2 near the outlet in a low-pressure liquid state, to be sucked into pump 23. At this time, the first refrigerant and the second refrigerant exchange heat in the form of a counter flow, thereby attaining highly efficient heat exchange. In addition, the second refrigerant to be sucked into pump 23 can be maintained in a liquid phase state, and the efficiency of pump 23 can be maintained at high level.

Since each device can be operated efficiently as described above, a coefficient of performance COP corresponding to energy consumption efficiency of the entire air conditioning apparatus 1 can be maintained at high level.

(Heating Operation Control)

When air conditioning apparatus 1 is set in a heating operation mode, controller 100 controls the rotational speed of compressor 10 based on a signal from a temperature sensor 61 disposed at point D1 near the outlet of intermediate heat exchanger 22, so as to maintain constant an outlet temperature at a position indicated by point D1 near the outlet of intermediate heat exchanger 22.

In second refrigerant circuit 3, the opening degrees of flow rate control valves 33, 43, 53 are controlled such that outlet temperatures at points C21, C22, C23 near the outlets of three indoor heat exchangers 31, 41, 51 are maintained at their respective target temperatures. Controller 100 controls the opening degrees of flow rate control valves 33, 43, 53 based on signals from temperature sensors 74, 75, 76 disposed near the outlets of indoor heat exchangers 31, 41, 51.

With the control as described above, air conditioning apparatus 1 can be operated at an efficient and optimal operational point depending on the load of each of indoor heat exchangers 31, 41, 51.

What is important here, so as not to reduce the efficiency, is to ensure the degree of subcooling at point D1 in the first refrigerant circuit, and to maintain the second refrigerant to be sucked into pump 23 in a liquid phase state.

In intermediate heat exchanger 22, the first refrigerant flows in through point A1 near the inlet in a high-pressure gaseous state, changes in phase while losing heat to the second refrigerant, and flows out to point D1 near the outlet in a high-pressure liquid state. The second refrigerant, on the other hand, flows in through point A2 near the inlet in a high-pressure liquid state, changes in phase while taking heat from the first refrigerant, and flows out to point E2 near the outlet in a high-pressure gaseous state. At this time, the first refrigerant and the second refrigerant exchange heat in the form of a counter flow, thereby allowing the primary circuit to ensure the degree of subcooling at a point D2, and maintaining the high efficiency of the refrigeration cycle.

In the second refrigerant circuit, a temperature at point A2 near the suction port of pump 23 is measured by a temperature sensor 62, and the amount of circulation of the second refrigerant is controlled by the rotational speed of pump 23 and the opening degrees of flow rate control valves 33, 43, 53, such that the second refrigerant to be sucked into pump 23 is maintained in a liquid phase state.

With the control as described above, each device can be operated efficiently, thereby further improving the coefficient of performance COP corresponding to energy consumption efficiency of the entire air conditioning apparatus 1.

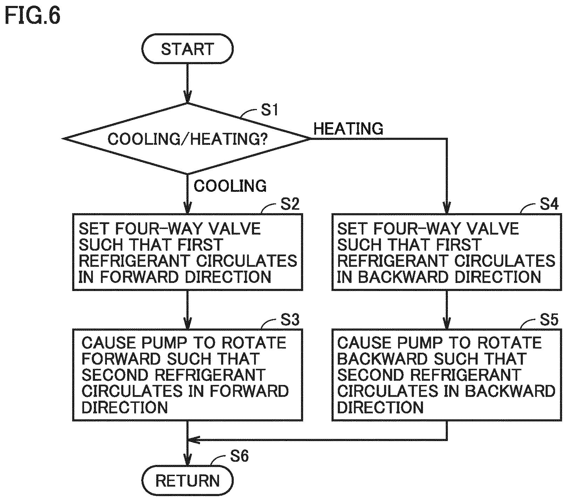

Fig. 6 is a flowchart illustrating control of switching the refrigerant circulation direction performed by controller 100. Referring to Figs. 1 and 6, in step S1, controller 100 determines whether an operation mode that has been set by a remote controller or the like is cooling or heating.

When cooling is determined in step S1, in step S2, controller 100 sets four-way valve 12 such that the first refrigerant circulates in the forward direction. Further, in step S3, controller 100 causes pump 23 to rotate forward such that the second refrigerant circulates in the forward direction. With such control, the first refrigerant and the second refrigerant circulate as indicated by the dashed line arrows in Fig. 1, causing the first refrigerant flowing through first flow path H1 and the second refrigerant flowing through second flow path H2 in intermediate heat exchanger 22 to form a counter flow.

When heating is determined in step S1, on the other hand, in step S4, controller 100 sets four-way valve 12 such that the first refrigerant circulates in the backward direction. Further, in step S5, controller 100 causes pump 23 to rotate backward such that the second refrigerant circulates in the backward direction. With such control, the first refrigerant and the second refrigerant circulate as indicated by the solid line arrows in Fig. 3, causing the first refrigerant flowing through first flow path H1 and the second refrigerant flowing through second flow path H2 in intermediate heat exchanger 22 to form a counter flow.

In the example described above, as means for switching between the cooling operation and the heating operation, the circulation direction of the first refrigerant in first refrigerant circuit 2 is switched by four-way valve 12 disposed after the discharge of compressor 10. In second refrigerant circuit 3, on the other hand, the circulation direction of the second refrigerant is switched by switching the rotation direction of pump 23 between the forward and backward directions By performing these types of switching in conjunction with each other, the second refrigerant to be sucked into pump 23 can be maintained in a liquid state, while the heat exchange in the form of a counter flow is maintained between the first refrigerant and the second refrigerant flowing through intermediate heat exchanger 22.

(Explanation of Refrigerant Types That Reduce Total GWP Value)

In a vapor compressor refrigeration cycle of an air conditioning apparatus, a conversion to lower GWP refrigerants has been promoted as a first step while HFC refrigerants having high energy efficiency are maintained. The conversion is, for example, from R410A with a GWP of 2090 to R32 with a GWP of 675. However, this is a far cry from a reduction target for the total GWP value set by international regulations.

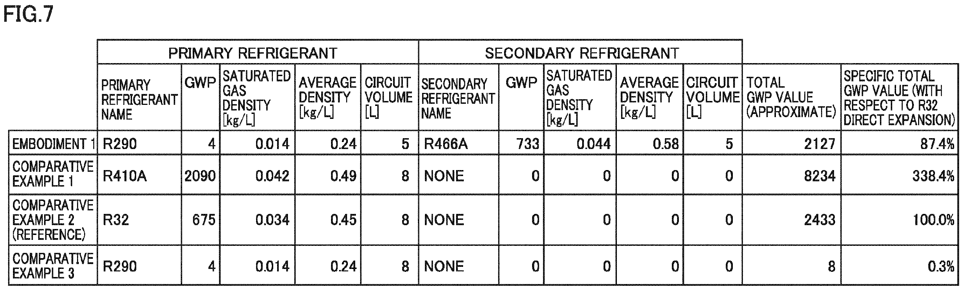

Fig. 7 is a diagram showing relations between used refrigerants and total GWP values in Embodiment 1 and Comparative Examples 1 to 3.

Embodiment 1 describes an example where a highly flammable refrigerant (classification: A3) is used as the first refrigerant and a non-flammable refrigerant is used as the second refrigerant. When propane (R290) is used as the first refrigerant, the GWP is as low as 4. However, highly flammable refrigerants are restricted by laws and regulations when used indoors.

Next, as the second refrigerant which is a medium for transferring heat toward a room, non-flammable and nontoxic R466A (a mixed refrigerant of R32, R125, CF3I) was used in anticipation of a building easily affected by water. R466A has a GWP of 733, which is equivalent to that of R32, and which is approximately one-third of that of R410A.

For example, a volume of 10 L of enclosed refrigerant is distributed such that 5 L is enclosed in first refrigerant circuit 2 and 5 L is enclosed in second refrigerant circuit 3. Of the 5 L in first refrigerant circuit 2, 1 L is enclosed in intermediate heat exchanger 22. Of the 5 L in second refrigerant circuit 3, it is assumed that 1 L is enclosed in intermediate heat exchanger 22, 1 L is enclosed in a combination of indoor temperature control units 30, 40, 50, and 1 L is enclosed in remaining pipes 11.

In the following, the total GWP values (= Σ (GWP × refrigerant volume × density)) by the respective enclosed refrigerants are compared. Here, the effect of refrigerant density is represented as "× Σρ." The refrigerant density is distributed, in an evaporative heat exchanger and a condensing heat exchanger, varying from a saturated liquid state to a saturated gaseous state. Here, it was assumed that the first refrigerant had a condensing temperature (CT) of 45°C and an evaporating temperature (ET) of 10°C, a saturated liquid state density and a saturated gaseous state density were calculated for each type of refrigerants from a physical property value database (such as the REFPROP of the NIST), and an averaged value pave was used.

The total GWP value of each type of refrigerants was calculated as the total GWP value = GWP × refrigerant volume × average density pave. In the present embodiment, a specific total GWP value was calculated with respect to a specific total GWP value of an R32 refrigerant direct expansion type, to demonstrate the reduction effect by the refrigerant type in the secondary circuit.

A pressure loss and the amount of refrigerant circulation during a disturbed flow, on the other hand, are expressed by the following equations:

$$\text{Pressure loss} = \text{coefficient of friction} \times \text{amount of refrigerant circulation} \div \{2 \times$$

$$\text{refrigerant density} \times (\text{flow path cross-sectional area})^2\}$$

Amount of refrigerant circulation = refrigeration capacity (or heating capacity) ÷ evaporation latent heat ratio (or condensation latent heat ratio)

Therefore, the pressure loss is inversely proportional to the refrigerant density and the evaporation latent heat ratio (or the condensation latent heat ratio). Since the pressure loss is at a maximum when the refrigerant density is at a minimum, the pressure losses can be compared by the values of evaporation-side saturated gas densities.

Comparative Example 1, Comparative Example 2, Comparative Example 3 in Fig. 7 are comparative examples employing a "direct expansion cycle" in which an indoor unit and an outdoor unit are connected with a refrigerant pipe, and refrigerant is expanded to perform heat exchange near a space to be air conditioned. In each comparative example, it is assumed that in a volume of 8 L of enclosed refrigerant, which results from subtracting 1 L on the first refrigerant side and 1 L on the second refrigerant side of intermediate heat exchanger 22 from the volume of 10 L of enclosed refrigerant in Embodiment 1 of the present disclosure, only the first refrigerant is enclosed.

Comparative Example 2 employs the direct expansion cycle enclosing R32 as the primary refrigerant type, and it can be estimated that the total GWP value is 675 × 0.45 × 8 ≈ 2433. With this as a reference value, a specific total GWP value = 100% is defined.

Comparative Example 1 employs the direct expansion cycle enclosing R410A as the primary refrigerant type, where the total GWP value is 8234, and the specific total GWP value is 338.4%.

Comparative Example 3 employs the direct expansion cycle enclosing R290 as the primary refrigerant type, where the total GWP value is 8, and the specific total GWP value is 0.3%.

In contrast, in Embodiment 1, an indirect cycle is formed by using R290 as the first refrigerant and using R466A as the second refrigerant. Ignoring the effect of the refrigerant density distribution, the total GWP value is 4 × 0.24 × 5 + 733 × 0.58 × 5 = 2127 in Embodiment 1. When compared to the total GWP value of the direct expansion cycle using the existing R410A refrigerant in Comparative Example 1, the total GWP value can be reduced by approximately 74% in Embodiment 1.

Further, when compared to the total GWP value of the R32 direct expansion cycle in Comparative Example 2, the total GWP value can be reduced by approximately 13%. Therefore, the combination of the refrigerant types in Embodiment 1 can reduce the total GWP value compared to when R32 is used indoors, and is more advantageous than Comparative Example 2 which is restricted in terms of the amount of refrigerant and which is required to install a safety device.

On the other hand, a pressure loss that occurs in pipe 11G of second refrigerant circuit 3 has a greater effect than that in pipe 11L. It is seen from the p-h diagram during the cooling operation in Fig. 2 that a pressure difference between point D2 and point E2 occurs as a pressure loss in the second refrigerant circuit side cycle, and correspondingly, an evaporating temperature (ET) and a compressor suction pressure (point A1 pressure) in the first refrigerant circuit side cycle decrease, and a compression input increases, resulting in reduced efficiency of the primary side cycle. The effect of the pressure loss that occurs in pipe 11G also occurs in the direct expansion cycle. Thus, a pipe diameter may be increased so that the pressure losses become equal. Usually, a pipe diameter increased twofold or less is practically allowed, and thus does not cause performance degradation by the indirect cycle.

The R466 refrigerant has an evaporation latent heat ratio lower than that of R32, but has a saturated gas density which is 30% higher than that of R32. Thus, the R466 refrigerant has a pressure loss well within an allowable range, and poses no practical problems as long as it is used in second refrigerant circuit 3.

In contrast, a temperature difference between the first refrigerant and the second refrigerant that occurs in intermediate heat exchanger 22 causes performance degradation by the indirect cycle, and needs to be minimized. In the present embodiment, therefore, a design was adopted to perform heat exchange in the form of a counter flow both in the cooling operation and the heating operation.

As described above, according to air conditioning apparatus 1 using the refrigerant indirect cycle in Embodiment 1, the total GWP value of refrigerant enclosed in the air conditioning apparatus can be reduced, thereby contributing to preventing global warming. In addition, because the loss that occurs can be suppressed, and each device can be operated efficiently as described above, a high coefficient of performance COP can be maintained for an air conditioning apparatus of a refrigerant indirect cycle.

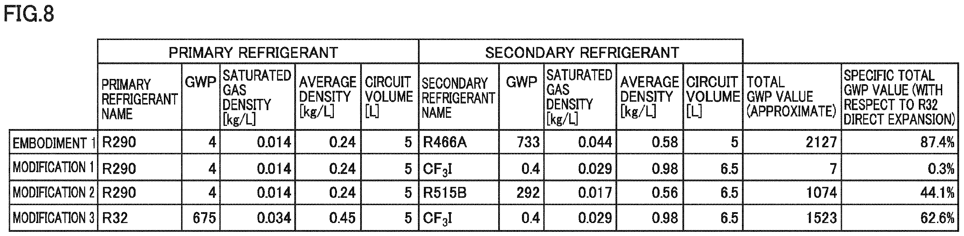

Fig. 8 is a diagram showing comparison results of total GWP values (with respect to the R32 direct expansion cycle) according to Embodiment 1 and its Modifications 1 to 3.

Modification 1 of Embodiment 1

In Modification 1 of Embodiment 1, it is assumed that 100% $CF_3I$ is used as the second refrigerant. A feature of the non-flammable (classification: A1) and nontoxic $CF_3I$ is that it has a very low GWP of 0.4 (taken from IPCC documents). The $CF_3I$ refrigerant, on the other hand, has an average density twice as high as that of R32, but has a saturated gas density which is 15% lower than that of R32, and also has a lower evaporation latent heat ratio, and therefore has a drawback of increasing the pressure loss on the gas pipe side when used in second refrigerant circuit 3.

To make the pressure losses in the gas pipes equal, the inner diameter of pipe 11G needs to be increased twofold, and the cross-sectional area of pipe 11G needs to be increased fourfold. Assuming that the inner diameter of pipe 11L is not changed because the pressure loss in pipe 11L through which the liquid refrigerant flows does not change, the volume $\times$ density effect of pipe 11 is increased 2.5 times, which corresponds to 2.5 L (an increase by 1.5 L).

When an indirect cycle is formed by using R290 as the first refrigerant and using $CF_3I$ as the second refrigerant, the total GWP value is 7. When compared to the R410A direct expansion cycle in Comparative Example 1, the total GWP value can be reduced by approximately 99.9% in Modification 1 of Embodiment 1. When compared to the R32 direct expansion cycle in Comparative Example 2, the total GWP value can be reduced by approximately 99.7%.

Modification 2 of Embodiment 1

In Modification 2 of Embodiment 1, it is assumed that R515B (a mixed refrigerant of R1234ze: 91%, R227ae: 9%) is used as the second refrigerant. The non-flammable (classification: A1) and nontoxic R515B has a GWP of 292, which is approximately one half of that of R32, and approximately 15% of that of R410A. The R515B refrigerant, on the other hand, has an average density which is 30% higher than that of R32, but has a saturated gas density which is 50% lower than that of R32, and therefore has a drawback of increasing the pressure loss on the gas pipe side when used in second refrigerant circuit 3.

To make the pressure losses in the gas pipes equal, the inner diameter of pipe 110 needs to be increased twofold, and the cross-sectional area of pipe 11G needs to be increased fourfold. Assuming that the inner diameter of pipe 11L is not changed because the pressure loss in pipe 11L through which the liquid refrigerant flows does not change, the volume $\times$ density effect of pipe 11 is increased 2.5 times, which corresponds to 2.5 L (an increase by 1.5 L).

When an indirect cycle is formed by using R290 as the first refrigerant and using R515B as the second refrigerant, the total GWP value is 1074. When compared to the R32 direct expansion cycle in Comparative Example 2, the total GWP value can be reduced by 56% in Modification 2 of Embodiment 1.

Modification 3 of Embodiment 1

In Modification 3 of Embodiment 1, it is assumed that a mildly flammable refrigerant (classification: A2L) is used as the first refrigerant, and a non-flammable (classification: A1) low GWP refrigerant is used, as in Embodiment 1, as the second refrigerant. In this case, R32 having high performance in theoretical COP, pressure loss, and specific latent heat capacity is selected as the first refrigerant, and non-flammable (classification: A1) and nontoxic $CF_3I$ is selected, as in Modification 1, as the second refrigerant.

When the inner diameter of pipe 11G is increased twofold and the cross-sectional area of pipe 11G is increased fourfold to make the pressure losses in the gas pipes equal, the secondary circuit volume increases by 1.5 L, which corresponds to 6.5.

When an indirect cycle is formed by using R32 as the first refrigerant and using $CF_3I$ as the second refrigerant, the total GWP value is 1523. With respect to the R32 direct expansion cycle in Comparative Example 2 as 100%, the total GWP value can be reduced by 37%. Although the effect of reducing the total GWP value is lower than when R290 is used as the first refrigerant, R32 provides superior performance (theoretical COP, pressure loss, and specific latent heat capacity). Since the effect of the pressure loss of the gas refrigerant of $CF_3I$ is low and at an allowable level, Modification 3 of Embodiment 1 is suitable for obtaining a high COP.

As described above, if the second refrigerant can be replaced and configured with a low GWP refrigerant that has been rendered non-flammable as in Modifications 1 to 3 of Embodiment 1, the total GWP value of refrigerant enclosed in the air conditioning apparatus can be reduced to thereby contribute to preventing global warming, even in the case of 100% $CF_3I$, or even in the case of a mixed refrigerant including $CF_3I$. In addition, although it may be required to take measures such as increasing the thickness of the pipe so as to reduce the pressure loss in pipe 11G of second refrigerant circuit 3, a design can be adopted to provide efficient operation of each device, and hence a high coefficient of performance COP can be maintained for an air conditioning apparatus of a refrigerant indirect cycle.

Embodiment 2

Embodiment 2 is similar to Embodiment 1 in the assumed indoor side and outdoor side cycles, the cooling-heating switching means, and the first refrigerant type, but is different in that a low flammable refrigerant (classification: A2L) is used instead of the non-flammable one as the second refrigerant. This is intended to attain a lower total GWP value than in Embodiment 1.

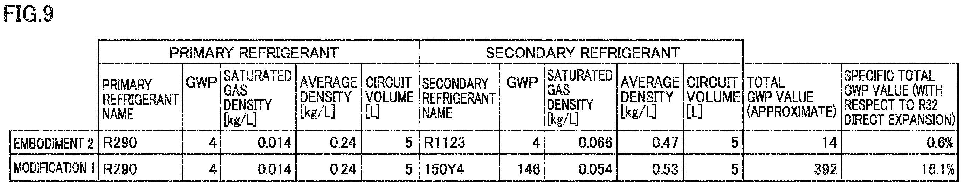

Fig. 9 is a diagram showing comparison results of total GWP values according to Embodiment 2, with respect to the R32 direct expansion cycle.

R1123, selected here as the second refrigerant, has a GWP of 4, which is equivalent to that of R290. R1123 has a specific evaporation latent heat which is one half of that of R32, has a saturated gas density which is twice that of R32, and also has a pressure loss in a main gas pipe which is equivalent to that of R32, thus posing no practical problems. In the following, the total GWP values by the respective enclosed refrigerants are determined and compared in a manner similar to that of Embodiment 1.

In Embodiment 2, when an indirect cycle is formed by using R290 as the first refrigerant and using R1123 as the second refrigerant, the total GWP value is 14. With respect to the R32 direct expansion cycle in Comparative Example 2 as 100%, the total GWP value can be reduced by 99.4%.

In the case of the R290 direct expansion cycle in Comparative Example 3, the total GWP value is 8, which is a very small value. However, since the amount of a highly flammable refrigerant (classification: A3) in a room is regulated when used in a large capacity air conditioning apparatus or cooling equipment, the R290 direct expansion cycle is not generally used. In such a case, by using the secondary refrigerant indirect cycle as in Embodiment 2, an air conditioning apparatus with a very low total GWP value equivalent to that of the R290 direct expansion cycle can be attained, although safety measures are required such as a gas leakage detector and a ventilation system in a room.

As described above, according to the air conditioning apparatus using the secondary refrigerant indirect cycle in Embodiment 2, the total GWP value of refrigerant enclosed in the air conditioning apparatus can be reduced, thereby contributing to preventing global warming. In addition, because the loss that occurs can be suppressed, and each device can be operated efficiently, a high coefficient of performance COP can be maintained for an air conditioning apparatus of a refrigerant indirect cycle.

Modification 1 of Embodiment 2

In Modification 1 of Embodiment 2, it is assumed that AMOLEA® 150Y4 (a mixed refrigerant of R1123: 60%, R32: 21.5%, R1234fy: 18.5%) is used as the second refrigerant. 150Y4 is a nontoxic and mildly flammable substance (classification: A2L) with a GWP of 146, and is restricted by laws and regulations when used indoors.

When an indirect cycle is formed by using R290 as the first refrigerant and using 150Y4 as the second refrigerant, the total GWP value is 392. With respect to the R32 direct expansion cycle in Comparative Example 2 as 100%, the total GWP value can be reduced by 84%.

As described above, according to air conditioning apparatus 1 in Modification 1 of Embodiment 2, the total GWP value of refrigerant enclosed in the air conditioning apparatus can be reduced, thereby contributing to preventing global warming. In addition, because the loss that occurs can be suppressed, and each device can be operated efficiently, a high coefficient of performance COP can be maintained for an air conditioning apparatus of a refrigerant indirect cycle.

Lastly, Embodiments 1 and 2 are summarized with reference to the drawings again.

An air conditioning apparatus 1 shown in Figs. 1 and 3 includes a first refrigerant circuit 2 enclosing a first refrigerant, and a second refrigerant circuit 3 enclosing a second refrigerant. First refrigerant circuit 2 includes a compressor 10 configured to compress the first refrigerant in a gaseous state, an outdoor heat exchanger 13 configured to exchange heat between the first refrigerant and outside air, an expansion device 24 configured to decompress and expand the first refrigerant, and a first flow path H1 through which the first refrigerant passes in an intermediate heat exchanger 22 configured to exchange heat between the first refrigerant and the second refrigerant. Second refrigerant circuit 3 includes a pump 23 configured to increase a pressure of the second refrigerant in a liquid state and transfer the second refrigerant, a second flow path H2 through which the second refrigerant passes in intermediate heat exchanger 22, and indoor heat exchangers 31, 41, 51 configured to exchange heat between the second refrigerant and air blown into a room. As shown in Figs. 7 to 9, at least one of the first refrigerant and the second refrigerant has a global warming potential lower than that of R32, and as was described in Embodiments 1 and 2, the second refrigerant has a lower flammable limit concentration higher than that of the first refrigerant. For example, a highly flammable refrigerant (classification: A3) can be used as the first refrigerant, and a non-flammable refrigerant can be used as the second refrigerant. Alternatively, for example, a mildly flammable refrigerant (classification: A2L) can be used as the first refrigerant, and a non-flammable (classification: A1) refrigerant can be used as the second refrigerant.

As a result, the total GWP value can be reduced, and in the event of refrigerant leakage into a room, flammability can be reduced as compared to when a highly flammable refrigerant is used entirely.

Preferably, in first flow path H1, a direction in which the first refrigerant flows through first refrigerant circuit 2 is reversed between during cooling operation (Fig. 1) and during heating operation (Fig. 3). In conjunction therewith, a direction in which the second refrigerant flows through second flow path H2 is reversed between during the cooling operation (Fig. 1) and during the heating operation (Fig. 3), such that the first refrigerant flowing through first flow path H1 and the second refrigerant flowing through second flow path H2 form a counter flow.

As a result, heat exchange takes place always in the form of a counter flow in intermediate heat exchanger 22. Thus, reduction in efficiency of the heat exchange in intermediate heat exchanger 22 can be prevented even when the switching is made between the cooling operation and the heating operation.

More preferably, first refrigerant circuit 2 further includes a four-way valve 12 connected to a discharge port and a suction port of the compressor. Four-way valve 12 is configured to, during the cooling operation, pass the first refrigerant from the discharge port of compressor 10 to outdoor heat exchanger 13, and pass the first refrigerant that has passed through first flow path H1 to the suction port of compressor 10. Four-way valve 12 is configured to, during the heating operation, pass the first refrigerant from the discharge port of compressor 10 to first flow path H1, and pass the first refrigerant that has passed through outdoor heat exchanger 13 to the suction port of compressor 10. Pump 23 is configured to be able to switch a rotational direction of a built-in motor, to thereby reverse the direction in which the second refrigerant flows through second flow path H2. Instead of causing pump 23 to rotate backward, a switching valve such as another four-way valve may be provided, and this switching valve may be connected to a suction port and a discharge port of pump 23 to reverse the circulation direction of the second refrigerant.

Preferably, second refrigerant circuit 3 further includes flow rate control valves 33, 43, 53 configured to control flow rates of the second refrigerant flowing through indoor heat exchangers 31, 41, 51. Air conditioning apparatus 1 further includes a controller 100 configured to control first refrigerant circuit 2 and second refrigerant circuit 3. Controller 100 is configured to, during cooling operation, control a rotational speed of compressor 10 so as to maintain constant a degree of subcooling of the second refrigerant that has passed through second flow path H2, control opening degrees of flow rate control valves 33, 43, 53 so as to maintain constant degrees of superheat of the second refrigerant that has passed through indoor heat exchangers 31, 41, 51, and control, depending on a sum of loads of indoor heat exchangers 31, 41, 51, a flow rate of the second refrigerant discharged from pump 23.

Preferably, intermediate heat exchanger 22 is a plate heat exchanger configured to exchange heat between the first refrigerant and the second refrigerant.

Preferably, as was described in Embodiment 1 and its modifications, the second refrigerant is a $CF_3I$ single refrigerant, or a mixed refrigerant including $CF_3I$.

Preferably, as was described in Embodiment 2 and its modification, the second refrigerant is an HFC1123 single refrigerant, or a mixed refrigerant including HFC1123, and the second refrigerant has a global warming potential lower than that of R32. In this case, the total GWP value can be further reduced.

Although the refrigerant circuit as shown in Figs. 1 and 3 has been described in Embodiments 1 and 2, any other configuration may be employed in which first refrigerant circuit 2 on the outdoor side and second refrigerant circuit 3 on the indoor side each form a closed circuit, and cascade heat exchange takes place in intermediate heat exchanger 22.

The values of the volumes of the refrigerant circuits have also been described in simplified form in Embodiments 1 and 2. As long as the volume of second refrigerant circuit 3 occupies approximately one half of the total volume, and the volume makes up a non-negligible significant proportion of the refrigerant pipe coupling intermediate heat exchanger 22 and outdoor heat exchanger 13, then the effect of reducing the total GWP value as a whole can be reduced by making the second refrigerant of the indirect cycle non-flammable and by reducing the GWP of the second refrigerant. Thus, any applications using a vapor compression refrigeration cycle can be employed without limitations, and many different capability areas and applications such as an RAC, a PAC, and a building air conditioner are applicable.

In Embodiments 1 and 2, the air conditioning apparatus shown in Figs. 1 and 3 has been described as a multiple type in which indoor temperature control units 30, 40, 50 formed of the plurality of indoor heat exchangers 31, 41, 51 and flow rate control valves 33, 43, 53 are provided so as to adjust the temperature for each room. However, a similar effect is also obtained in the case of a single type.

It should be understood that the embodiments disclosed herein are illustrative and non-restrictive in every respect. The scope of the present disclosure is defined by the terms of the claims, rather than the description of the embodiments above, and is intended to include any modifications within the meaning and scope equivalent to the terms of the claims.

REFERENCE SIGNS LIST

1 air conditioning apparatus; 2 first refrigerant circuit; 3 second refrigerant circuit; 7, 11, 11G, 11L pipe; 10 compressor; 12 four-way valve; 13 outdoor heat exchanger; 20 intermediate heat exchange unit; 22 intermediate heat exchanger; 23 pump; 24 expansion device; 30, 40, 50 indoor temperature control unit; 31, 41, 51 indoor heat exchanger; 33, 43, 53 flow rate control valve; 61, 63, 67, 68, 69, 74, 75, 76 temperature sensor; 100 controller; 102 processor; 103 memory; H1 first flow path; H2 second flow path.

**Claims**

1. An air conditioning apparatus comprising:

   a first refrigerant circuit enclosing a first refrigerant; and
   a second refrigerant circuit enclosing a second refrigerant, wherein
   the first refrigerant circuit includes

   a compressor configured to compress the first refrigerant in a gaseous state,
   an outdoor heat exchanger configured to exchange heat between the first refrigerant and outside air,
   an expansion device configured to decompress and expand the first refrigerant, and
   a first flow path through which the first refrigerant passes in an intermediate heat exchanger configured to exchange heat between the first refrigerant and the second refrigerant,

   the second refrigerant circuit includes

   a pump configured to increase a pressure of the second refrigerant in a liquid state and transfer the second refrigerant,
   a second flow path through which the second refrigerant passes in the intermediate heat exchanger, and
   an indoor heat exchanger configured to exchange heat between the second refrigerant and air blown into a room, and

   at least one of the first refrigerant and the second refrigerant has a global warming potential lower than that of R32, and the second refrigerant has a lower flammable limit concentration higher than that of the first refrigerant.

2. The air conditioning apparatus according to claim 1, wherein

   in the first flow path, a direction in which the first refrigerant flows through the first refrigerant circuit is reversed between during cooling operation and during heating operation, and
   a direction in which the second refrigerant flows through the second flow path is reversed between during the cooling operation and during the heating operation, such that the first refrigerant flowing through the first flow path and the second refrigerant flowing through the second flow path form a counter flow.

3. The air conditioning apparatus according to claim 2, wherein

the first refrigerant circuit further includes a four-way valve connected to a discharge port and a suction port of the compressor,
the four-way valve is configured to

during the cooling operation, pass the first refrigerant from the discharge port to the outdoor heat exchanger, and pass the first refrigerant that has passed through the first flow path to the suction port, and
during the heating operation, pass the first refrigerant from the discharge port to the first flow path, and pass the first refrigerant that has passed through the outdoor heat exchanger to the suction port, and

the pump is configured to be able to switch its rotational direction, to thereby reverse the direction in which the second refrigerant flows through the second flow path.

4. The air conditioning apparatus according to claim 1, wherein

the second refrigerant circuit further includes a flow rate control valve configured to control a flow rate of the second refrigerant flowing through the indoor heat exchanger,
the air conditioning apparatus further comprises a controller configured to control the first refrigerant circuit and the second refrigerant circuit, and
the controller is configured to, during cooling operation,

control a rotational speed of the compressor so as to maintain constant a degree of subcooling of the second refrigerant that has passed through the second flow path,
control an opening degree of the flow rate control valve so as to maintain constant a degree of superheat of the second refrigerant that has passed through the indoor heat exchanger, and
control, depending on a sum of loads of the indoor heat exchanger, a flow rate of the second refrigerant discharged from the pump.

5. The air conditioning apparatus according to claim 1, wherein
the intermediate heat exchanger is a plate heat exchanger configured to exchange heat between the first refrigerant and the second refrigerant.
6. The air conditioning apparatus according to claim 1, wherein
the second refrigerant is a $CF_3I$ single refrigerant, or a mixed refrigerant including $CF_3I$.
7. The air conditioning apparatus according to claim 1, wherein
the second refrigerant is an HFC1123 single refrigerant, or a mixed refrigerant including HFC1123, and the second refrigerant has a global warming potential lower than that of R32.

FIG.1

\<DURING COOLING OPERATION\>

FIG.2

FIG.3

FIG.4

# FIG.5

COOLING-HEATING SWITCHING
BY FOUR-WAY VALVE AND PUMP

| | | SECONDARY SIDE PUMP ROTATIONAL DIRECTION | |
|---|---|---|---|
| | | FORWARD DIRECTION (TOWARD OUTDOOR HEAT EXCHANGER) | BACKWARD DIRECTION (TOWARD INTERMEDIATE HEAT EXCHANGER) |
| PRIMARY SIDE FOUR-WAY VALVE DIRECTION | FORWARD DIRECTION (TOWARD OUTDOOR HEAT EXCHANGER) | COOLING OPERATION (COUNTER FLOW HEAT EXCHANGE) | × NO |
| | BACKWARD DIRECTION (TOWARD INTERMEDIATE HEAT EXCHANGER) | × NO | HEATING OPERATION (COUNTER FLOW HEAT EXCHANGE) |

FIG.6

```
                    ┌──────────┐
                    │  START   │
                    └────┬─────┘
                         │
                         │            ⌐S1
                         ▼
              ◇─────────────────────◇      HEATING
               COOLING/HEATING?  ──────────────────────┐
              ◇─────────────────────◇                  │
                         │                              │
                    COOLING                             │
                         │         ⌐S2                  │          ⌐S4
                         ▼                              ▼
              ┌─────────────────────┐        ┌─────────────────────┐
              │ SET FOUR-WAY VALVE  │        │ SET FOUR-WAY VALVE  │
              │ SUCH THAT FIRST     │        │ SUCH THAT FIRST     │
              │ REFRIGERANT         │        │ REFRIGERANT         │
              │ CIRCULATES IN       │        │ CIRCULATES IN       │
              │ FORWARD DIRECTION   │        │ BACKWARD DIRECTION  │
              └─────────┬───────────┘        └─────────┬───────────┘
                        │           ⌐S3               │          ⌐S5
                        ▼                              ▼
              ┌─────────────────────┐        ┌─────────────────────┐
              │ CAUSE PUMP TO ROTATE│        │ CAUSE PUMP TO ROTATE│
              │ FORWARD SUCH THAT   │        │ BACKWARD SUCH THAT  │
              │ SECOND REFRIGERANT  │        │ SECOND REFRIGERANT  │
              │ CIRCULATES IN       │        │ CIRCULATES IN       │
              │ FORWARD DIRECTION   │        │ BACKWARD DIRECTION  │
              └─────────┬───────────┘        └─────────┬───────────┘
                        │◄─────────────────────────────┘
                        │    ⌐S6
                        ▼
                  ┌──────────┐
                  │  RETURN  │
                  └──────────┘
```

FIG.7

| | PRIMARY REFRIGERANT | | | | | SECONDARY REFRIGERANT | | | | | TOTAL GWP VALUE (APPROXIMATE) | SPECIFIC TOTAL GWP VALUE (WITH RESPECT TO R32 DIRECT EXPANSION) |
|---|---|---|---|---|---|---|---|---|---|---|---|---|
| | PRIMARY REFRIGERANT NAME | GWP | SATURATED GAS DENSITY [kg/L] | AVERAGE DENSITY [kg/L] | CIRCUIT VOLUME [L] | SECONDARY REFRIGERANT NAME | GWP | SATURATED GAS DENSITY [kg/L] | AVERAGE DENSITY [kg/L] | CIRCUIT VOLUME [L] | | |
| EMBODIMENT 1 | R290 | 4 | 0.014 | 0.24 | 5 | R466A | 733 | 0.044 | 0.58 | 5 | 2127 | 87.4% |
| COMPARATIVE EXAMPLE 1 | R410A | 2090 | 0.042 | 0.49 | 8 | NONE | 0 | 0 | 0 | 0 | 8234 | 338.4% |
| COMPARATIVE EXAMPLE 2 (REFERENCE) | R32 | 675 | 0.034 | 0.45 | 8 | NONE | 0 | 0 | 0 | 0 | 2433 | 100.0% |
| COMPARATIVE EXAMPLE 3 | R290 | 4 | 0.014 | 0.24 | 8 | NONE | 0 | 0 | 0 | 0 | 8 | 0.3% |

FIG.8

| | PRIMARY REFRIGERANT | | | | | SECONDARY REFRIGERANT | | | | | | |
|---|---|---|---|---|---|---|---|---|---|---|---|---|
| | PRIMARY REFRIGERANT NAME | GWP | SATURATED GAS DENSITY [kg/L] | AVERAGE DENSITY [kg/L] | CIRCUIT VOLUME [L] | SECONDARY REFRIGERANT NAME | GWP | SATURATED GAS DENSITY [kg/L] | AVERAGE DENSITY [kg/L] | CIRCUIT VOLUME [L] | TOTAL GWP VALUE (APPROXIMATE) | SPECIFIC TOTAL GWP VALUE (WITH RESPECT TO R32 DIRECT EXPANSION) |
| EMBODIMENT 1 | R290 | 4 | 0.014 | 0.24 | 5 | R466A | 733 | 0.044 | 0.58 | 5 | 2127 | 87.4% |
| MODIFICATION 1 | R290 | 4 | 0.014 | 0.24 | 5 | CF$_3$I | 0.4 | 0.029 | 0.98 | 6.5 | 7 | 0.3% |
| MODIFICATION 2 | R290 | 4 | 0.014 | 0.24 | 5 | R515B | 292 | 0.017 | 0.56 | 6.5 | 1074 | 44.1% |
| MODIFICATION 3 | R32 | 675 | 0.034 | 0.45 | 5 | CF$_3$I | 0.4 | 0.029 | 0.98 | 6.5 | 1523 | 62.6% |

FIG.9

| | PRIMARY REFRIGERANT | | | | | SECONDARY REFRIGERANT | | | | | | |
|---|---|---|---|---|---|---|---|---|---|---|---|---|
| | PRIMARY REFRIGERANT NAME | GWP | SATURATED GAS DENSITY [kg/L] | AVERAGE DENSITY [kg/L] | CIRCUIT VOLUME [L] | SECONDARY REFRIGERANT NAME | GWP | SATURATED GAS DENSITY [kg/L] | AVERAGE DENSITY [kg/L] | CIRCUIT VOLUME [L] | TOTAL GWP VALUE (APPROXIMATE) | SPECIFIC TOTAL GWP VALUE (WITH RESPECT TO R32 DIRECT EXPANSION) |
| EMBODIMENT 2 | R290 | 4 | 0.014 | 0.24 | 5 | R1123 | 4 | 0.066 | 0.47 | 5 | 14 | 0.6% |
| MODIFICATION 1 | R290 | 4 | 0.014 | 0.24 | 5 | 150Y4 | 146 | 0.054 | 0.53 | 5 | 392 | 16.1% |

## INTERNATIONAL SEARCH REPORT

| | International application No. |
|---|---|
| | PCT/JP2019/029838 |

**A. CLASSIFICATION OF SUBJECT MATTER**
Int.Cl. F25B1/00(2006.01)i, F24F5/00(2006.01)i

According to International Patent Classification (IPC) or to both national classification and IPC

**B. FIELDS SEARCHED**

Minimum documentation searched (classification system followed by classification symbols)
Int.Cl. F25B1/00, F24F5/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2008-209075 A (MITSUBISHI HEAVY INDUSTRIES, LTD.) 11 September 2008, paragraphs [0001]-[0028], [0042]-[0052], fig. 10-14<br>(Family: none) | 1-4<br>5-7 |
| Y | JP 2006-3079 A (MITSUBISHI ELECTRIC CORPORATION) 05 January 2006, paragraphs [0036]-[0048], [0065], [0066], fig. 1, 5<br>(Family: none) | 5 |

☒  Further documents are listed in the continuation of Box C.     ☐  See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
|     24.09.2019 |     01.10.2019 |

| Name and mailing address of the ISA/ | Authorized officer |
|---|---|
|     Japan Patent Office<br>    3-4-3, Kasumigaseki, Chiyoda-ku,<br>    Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2019/029838 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2016-516099 A (ARKEMA FRANCE) 02 June 2016, paragraph [0029] & JP 2018-168374 A & US 2015/0377389 A1, paragraph [0042] & WO 2014/125218 A1 & FR 3002180 A & CN 105026153 A & KR 10-2015-0121082 A | 6 |
| Y | JP 2010-530952 A (E. I. DU PONT DE NEMOURS AND COMPANY) 16 September 2010, paragraph [0021] & US 2008/0314073 A1, paragraph [0023] & WO 2008/157757 A1 & CN 101688817 A | 6 |
| Y | WO 2018/181057 A1 (DAIKIN INDUSTRIES, LTD.) 04 October 2018, paragraphs [0042]-[0045] (Family: none) | 7 |
| Y | WO 2017/122517 A1 (ASAHI GLASS CO., LTD.) 20 July 2017, claim 11 & US 2018/0320942 A1, claim 11 & EP 3404342 A1 & CN 109073295 A | 7 |

Form PCT/ISA/210 (continuation of second sheet) (January 2015)

**EP 4 006 442 A1**

## REFERENCES CITED IN THE DESCRIPTION

**Patent documents cited in the description**

- JP 7269964 A